# EUROPÄISCHE PATENTSCHRIFT

(11) **EP 1 233 256 B1**
(45) Veröffentlichungstag und Bekanntmachung des Hinweises auf die Patenterteilung: **16.10.2002**
(21) Anmeldenummer: 01103820.5
(22) Anmeldetag: 16.02.2001
(51) Int. Cl.: G01M 11/00

(54) **Vorrichtung und Verfahren zum Messen der chromatischen Dispersion einer optischen Übertragungsstrecke**
Procedure and device for measuring the chromatic dispersion of an optical transmission section
Procédé et dispositif de mesure de la dispersion chromatique d'une section de transmission optique

(43) Veröffentlichungstag der Anmeldung: 21.08.2002
(73) Patentinhaber: Acterna Eningen GmbH, 72800 Eningen (DE)
(72) Erfinder: Hoyer, Wolfgang, Dr., 72793 Pfullingen (DE)
(74) Vertreter: KOHLER SCHMID + PARTNER

(56) Entgegenhaltungen:
- EP-A- 0 280 328
- DE-A- 3 409 310
- US-A- 5 969 806
- US-A- 6 154 273

## Beschreibung

Die Erfindung betrifft ein Verfahren und eine Vorrichtung zum Messen der chromatischen Dispersion einer optischen Übertragungsstrecke.

Da der Brechungskoeffizient von optischen Glasfasern wellenlängenabhängig ist, ergeben sich für Signale unterschiedlicher Wellenlänge auch unterschiedliche Ausbreitungsgeschwindigkeiten. Das kann dazu führen, daß Spektralanteile eines modulierten optischen Signals nicht gleichzeitig am fernen Ende eintreffen und es zu Signalverzerrungen kommt.

Als Maß für die Laufzeit einer Signalkomponente wird die Gruppenlaufzeit t_{g} verwendet. Als chromatischen Dispersionskoeffizienten D bezeichnet man die Ableitung der Gruppenlaufzeit t_{g} nach der Wellenlänge λ bezogen auf die Länge L der Faser: D = 1/L *dt_{g}/dλ.

Die meist verwendeten Meßverfahren ("Modulation Phase-Shift Method", "Differential Phase-Shift Method") beruhen auf der klassischen Nyquist-Methode zur Gruppenlaufzeitmessung. Das optische Trägersignal wird mit einer Frequenz ω amplitudenmoduliert, die klein ist im Vergleich zur Trägerfrequenz. Im 1550 nm-Bereich liegen die optischen Frequenzen bei rund 200 THz, so daß diese Forderung für Modulationsfrequenzen bis in den hohen GHz-Bereich erfüllt ist. Die Modulationsfrequenz wird am Ende des Prüflings durch Demodulation zurückgewonnen und ihre Phasenlage mit derjenigen der Modulationsquelle verglichen. Nach Nyquist ergibt sich dann die Gruppenlaufzeit zu: t_{g} = Δβ/ω.

Zur Bestimmung der chromatischen Dispersion ist die Gruppenlaufzeitbestimmung in Abhängigkeit von der Wellenlänge durchzuführen und dann die Ableitung der Gruppenlaufzeit nach der Wellenlänge zu berechnen.

In der Praxis wird oft nur mit wenigen diskreten Wellenlängen gearbeitet, so daß auch nur eine näherungsweise Bestimmung der chromatischen Dispersion erfolgt. Die benötigte Zahl und der Abstand der Meßwellenlängen hängen vom Prüfling ab. Für Glasfasern genügen relativ grobe Wellenlängenschritte von ca. 5 oder 10 nm. Für schmalbandige Prüflinge, wie z.B. Dispersionskompensatoren mit Chirped Fiber Bragg Gratings, ist eine wesentlich geringere Schrittweite erforderlich (z.B. < 0,5 nm).

Die klassische Meßanordnung für die Nyquist-Methode verwendet eine abstimmbare Laserquelle und einen nachgeschalteten ("externen") Modulator. Als Modulationsfrequenzen findet man Werte im Bereich 50 MHz bis einige GHz, was wiederum eine leistungsfähige Hochfrequenzquelle und einen breitbandigen Photodetektor erforderlich macht. Die Gesamtausrüstung wird damit ziemlich teuer. Darüberhinaus sind diese Anordnungen nicht für Streckenmessungen geeignet, weil der Auswerteseite das sendeseitige Modulationssignal als Referenz zugeführt werden muß. Dies geschieht bei bekannten Lösungen entweder auf elektrischem oder optischem Wege über eine zusätzliche Kabelverbindung.

Der vorliegenden Erfindung liegt die Aufgabe zugrunde, ein Verfahren und eine Vorrichtung zum Messen der chromatischen Dispersion einer optischen Übertragungsstrecke ohne zusätzliche Referenzverbindung bereitzustellen.

Die oben genannte Aufgabe wird erfindungsgemäß gelöst durch ein Verfahren zum Messen der chromatischen Dispersion einer optischen Übertragungsstrecke, vorzugsweise eines Lichtwellenleiters, wobei ein amplitudenmoduliertes breitbandiges optisches Signal in die zu messende optische Übertragungsstrecke eingespeist wird, wobei das übertragene Signal in einen Referenzpfad, in dem aus dem übertragenen Signal die Modulationsfrequenz demoduliert wird, und in einen Meßpfad, in dem das übertragene Signal bei mehreren optischen Frequenzen jeweils demoduliert wird, aufgespalten wird, und wobei aus den Phasendifferenzen zwischen den mehreren demodulierten Signalen des Meßpfads und dem demodulierten Signal des Referenzpfads die chromatische Dispersion der optischen Übertragungsstrecke ermittelt wird.

Erfindungsgemäß kann beispielsweise sendeseitig eine optische Breitbandquelle vorgesehen sein, die mit einer hochfrequenten Schwingung amplitudenmoduliert ist. Das übertragene optische Signal wird empfangsseitig als Referenzsignal in einen Referenzpfad und als Meßsignal in einen Meßpfad aufgeteilt. Das Referenzsignal durchläuft ein breitbandiges optisches Filter, und dann wird mit einem Photodetektor das Modulationssignal zurückgewonnen, das als Referenz für einen Phasenvergleich dient. Das Meßsignal durchläuft ein abstimmbares schmalbandiges optisches Filter, und auch dort wird mit einem Photodetektor das Modulationssignal zurückgewonnen, dessen Phasenlage vom Referenzsignal wegen der chromatischen Dispersion abweicht. Aus der Änderung der Phasendifferenz bei verschiedenen Stellungen des schmalbandigen optischen Filters wird dann die chromatische Dispersion bestimmt.

Die einzelnen, bei den mehreren optischen Frequenzen gewonnenen Meßsignale sind jeweils wesentlich schwächer als das Referenzsignal. Dieser Signalunterschied läßt sich verringern, indem das übertragene Signal größtenteils, vorzugsweise zu mindestens 80%, in den Meßpfad eingekoppelt wird.

Vorzugsweise werden für die Phasendifferenzmessung die demodulierten Signale zuvor in einen niedrigeren Frequenzbereich umgesetzt.

Die oben genannte Aufgabe wird erfindungsgemäß auch gelöst durch eine Vorrichtung zum Messen der chromatischen Dispersion einer optischen Übertragungsstrecke, vorzugsweise eines Lichtwellenleiters, mit einer amplitudenmodulierten breitbandigen Lichtquelle eingangsseitig der zu messenden optischen Übertragungsstrecke, mit einer das übertragene optische Signal in einen Referenzpfad und einen Meßpfad aufspaltenden Einrichtung, mit einem im Meßpfad vorgesehenen abstimmbaren schmalbandigen optischen Filter, mit jeweils einem Photodetektor im Referenzpfad und im Meßpfad, und mit einer ausgangsseitig der beiden Photodetektoren vorgesehenen Phasenmeßeinrichtung zum Ermitteln der jeweils zwischen Referenz- und Meßpfad vorhandenen Phasendifferenzen, aus denen die chromatische Dispersion der optischen Übertragungsstrekke bestimmt werden kann. Das abstimmbare schmalbandige optische Filter ist im Meßpfad erforderlich, um das Meßsignal in Abhängigkeit von der Wellenlänge analysieren zu können. Dazu sollte die Bandbreite der Lichtquelle mindestens eine Größenordnung größer als die jeweilige Filterbandbreite des abstimmbaren optischen Filters sein.

Im Referenzpfad kann vor dem Photodetektor ein breitbandiges optisches Filter erforderlich sein, um die optische Bandbreite des übertragenen Signals so einzuengen, daß eine Auslöschung des Modulationssignals infolge von chromatischer Dispersion vermieden wird. In der Praxis könnte die Bandbreite des breitbandigen optischen Filters z.B. 30 nm betragen. In vielen Fällen ist bei geeigneter Wahl der amplitudenmodulierten Lichtquelle (z.B. eine Lichtquelle mit einer beschränkten Bandbreite) ein solches breitbandiges optisches Filter nicht erforderlich.

Vorzugsweise ist mit dem Meßpfad und dem Referenzpfad eine Frequenzquelle verbunden, welche die demodulierten Signale beider Pfade, z.B. 20 MHz-Signale, durch Frequenzmischen in einen niedrigeren Frequenzbereich, z.B. in den kHz-Bereich, umsetzt. Die Anforderungen an die Phasensensibilität der Frequenzquelle sind theoretisch gering, da deren Einfluß im Referenzpfad und Meßpfad gleichermaßen wirksam ist und sich bei der Phasenmessung heraushebt. Die umgesetzten Signale werden verstärkt und begrenzt, damit die Amplitude des Meßsignals nicht in das Meßergebnis eingeht.

Bekannte Phasenmesser haben nur einen begrenzten Meßbereich von z.B. 360°. Bei größeren Phasenwerten springt die Ausgangsspannung des Phasenmessers z.B. auf den Wert bei 0° zurück, um dann bis 720° wieder auf den Maximalwert anzusteigen usw. Dieses vieldeutige Verhalten mit Sprungstellen in der Phasenmessercharakteristik erschwert die Auswertung. In bevorzugten Ausführungsformen der erfindungsgemäßen Meßvorrichtung weist die Phasenmeßeinrichtung daher zwei Phasenmesser auf, deren Kennlinien, vorzugsweise um 180°, gegeneinander versetzt sind. Diese Anordnung mit zwei versetzt arbeitenden Phasenmessern hat den Vorteil, daß immer wenigstens ein Phasenmesser in sicherer Entfernung von einer solchen Sprungstelle arbeitet. Das ist besonders wichtig, wenn die auszuwertenden Signale durch Rauschen gestört sind. Da für die Bestimmung der chromatischen Dispersion immer nur kleine Phasendifferenzen und kleine Wellenlängendifferenzen ausgewertet werden, ist ein Phasenmesser mit einem großen durchgehenden Meßbereich auch nicht erforderlich. Vielmehr erreicht die vorgeschlagene Anordnung aus zwei versetzt arbeitenden Phasenmessern mit beschränktem Meßbereich eine bessere Auflösung und Meßgenauigkeit.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: schematisch die erfindungsgemäße Anordnung zur Messung der chromatischen Dispersion; und
- Fig. 2: schematisch eine besonders vorteilhafte Ausgestaltung der in der Meßanordnung der Fig. 1 verwendeten Phasenmeßeinrichtung.

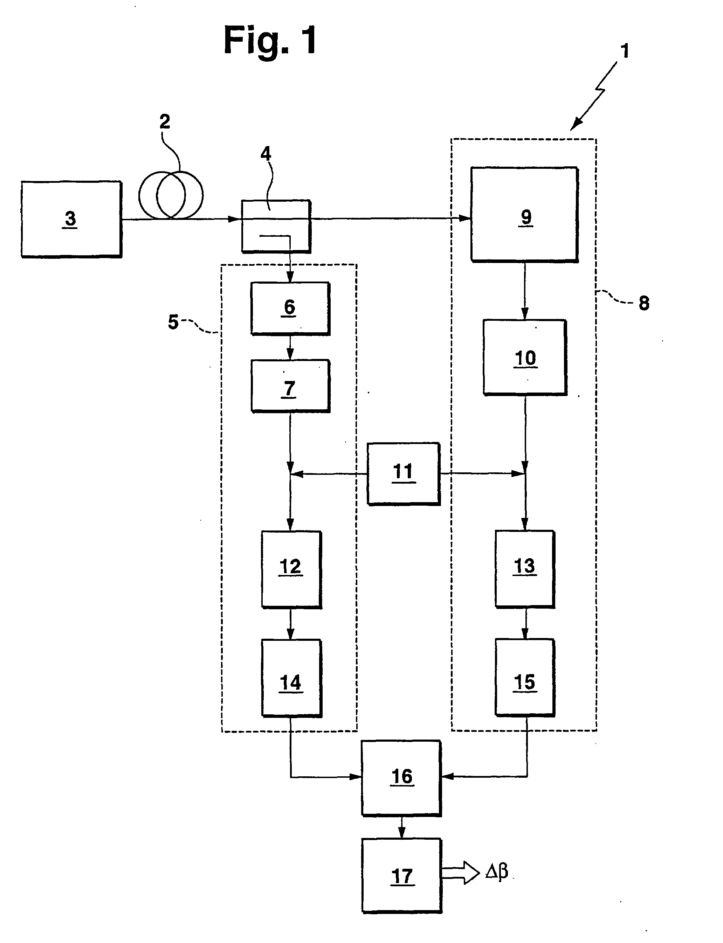

Die in **Fig. 1** insgesamt mit **1** bezeichnete Anordnung dient zum Messen der chromatischen Dispersion einer optischen Übertragungsstrecke, die im dargestellten Ausführungsbeispiel durch einen Lichtwellenleiter **2** (z.B. Glasfaser) gebildet ist.

Der Lichtwellenleiter 2 ist einenends an eine breitbandige optische Lichtquelle **3** angeschlossen, die intern mit einer im Vergleich zu den optischen Frequenzen niedrigeren Frequenz, z.B. mit 20 MHz, amplitudenmoduliert ist.

Anderenends ist der Lichtwellenleiter 2 an eine Einrichtung **4** angeschlossen, die das im Lichtwellenleiter 2 übertragene optische Signal in zwei Pfade aufgeteilt: 10% der Leistung laufen in einem Referenzpfad **5** über ein festes breitbandiges optisches Filter **6** in einen Photodetektor **7** (z.B. eine PIN-Diode). Das demodulierte 20 MHz-Signal an dessen Ausgang wird zu Referenzzwecken gebraucht. Das feste Filter 6 hat die Aufgabe, die optische Bandbreite des Empfangssignals so einzuengen, daß eine Auslöschung des Modulationssignals infolge von chromatischer Dispersion vermieden wird. In der Praxis könnte die Bandbreite des optischen Filters 6 z.B. 30 nm betragen. In vielen Fällen kann bei geeigneter Wahl der Lichtquelle 3 auf dieses Filter ganz verzichtet werden.

Die anderen 90% der Leistung sind für den eigentlichen Meßpfad **8** bestimmt und durchlaufen ein abstimmbares schmalbandiges optisches Filter **9**. Am Ausgang des Filters 9 findet man einen herausgefilterten schmalen Spektralanteil des übertragenen Spektrums, der aufgrund der chromatischen Dispersion des Lichtwellenleiters 2 (Prüfling) gegenüber dem Referenzpfad 5 eine abweichende Laufzeit aufweist. Wegen der geringeren Bandbreite des abstimmbaren Filters 9 ist das gefilterte Meßsignal wesentlich schwächer als das Referenzsignal. Deshalb ist für den Meßpfad 8 ein hochempfindlicher Photodetektor **10** mit APD-Empfänger (Avalanche Photo Diode; Lawinenphotodiode) erforderlich. Hinter dem Photodetektor 10 findet man wieder das 20 MHz-Signal, das allerdings gegenüber dem Referenzsignal infolge des dispersionsbedingten Laufzeitunterschieds eine Phasenverschiebung aufweist. Um die Phasenverschiebung zu messen, werden zunächst beide 20 MHz-Signale mittels einer an beide Pfade 5, 8 angeschlossenen Frequenzquelle **11** durch Frequenzmischung in einen niedrigeren Frequenzbereich (z.B. 11 kHz) umgesetzt. Die Anforderungen an die Phasensensibilität der Frequenzquelle 11 sind gering, da deren Einfluß im Referenzpfad 5 und im Meßpfad 8 gleichermaßen wirksam ist und sich bei der Phasenmessung herausheben müßte. Trotzdem ist an dieser Stelle ein stabiler Quarzoszillator zu empfehlen, weil die Zwischenfrequenz von 11 kHz sonst nicht genügend genau getroffen wird. Das stört besonders dann, wenn auf der 11 kHz-Ebene noch Bandbegrenzungsfilter nötig sind. Die umgesetzten Signale werden jeweils mit einem Verstärker **12**, **13** verstärkt und mit einem Begrenzer **14**, **15** amplitudenbegrenzt, damit die Amplitude des Meßsignals nicht in das Meßergebnis eingeht, und schließlich einer digitalen Phasenmeßeinrichtung **16** zugeführt. Ein nachgeschalteter Tiefpaß **17** mit niedriger Grenzfrequenz (z.B. 50 Hz) mittelt das Rauschen weitgehend heraus.

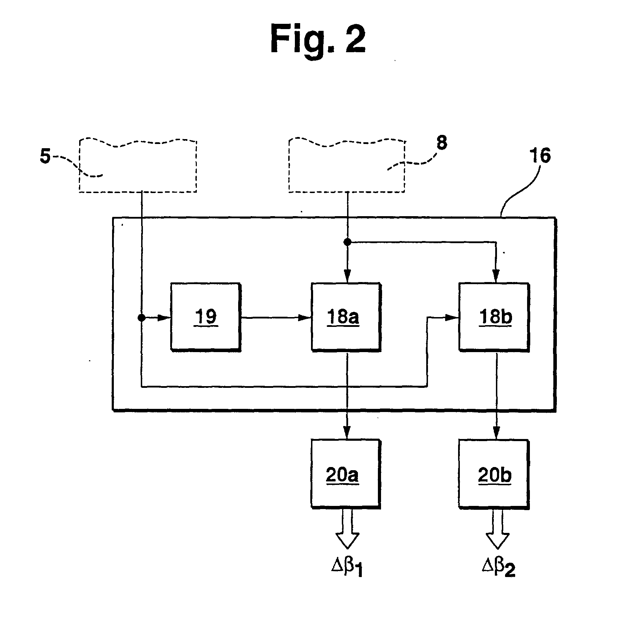

Wie **Fig. 2** zeigt, umfaßt die Phasenmeßeinrichtung 16 zwei identische Phasenmesser **18a, 18b,** deren Kennlinien mittels eines dem Phasenmesser 18a vorgeschalteten Inverters **19** um 180° gegeneinander versetzt sind. Die beiden amplitudenbegrenzten Signale des Referenz- und des Meßpfads 5, 8 werden jeweils beiden Phasenmessern 18a, 18b zugeführt. Damit sich ein eventuell im Signal enthaltenes Rauschen nach der Begrenzung und Komperierung nicht als Phasenjitter bemerkbar macht und zu einem Verrauschen der Ausgangsspannung der Phasenmesser 18a, 18b führt, ist den Phasenmessern 18a, 18b jeweils ein Tiefpaß **20a**, **20b** mit niedriger Grenzfrequenz (z.B. 50 Hz) nachgeschaltet, der das Rauschen weitgehend herausmittelt.

Der Meßvorgang an dem Lichtwellenleiter 2 spielt sich folgendermaßen ab:

Der Lichtwellenleiter 2 wird mit dem amplitudenmodulierten Breitbandsignal der Lichtquelle 3 gespeist. Auf der Empfangsseite wird das optische Filter 9 im Bereich 1500 bis 1600 nm kontinuierlich durchgestimmt (z.B. Dreieckwobbelung). Der Momentanwert der Wellenlänge λ wird gemessen. Parallel dazu werden die Ausgangsspannung der Phasenmeßeinrichtung 16, d.h. die Phasendifferenz Δβ, bzw. die Ausgangsspannungen der Phasenmesser 18a, 18b, d.h. die Phasendifferenzen Aßl und Δβ2 aufgezeichnet. Die so gewonnene Funktionen Δβ = f(λ) werden zunächst durch Mittelung über mehrere Wobbeldurchläufe vom Rauschen gereinigt. Die Meßergebnisse in der Umgebung von Phasenmesser-Sprungstellen werden verworfen. Die Bestimmung der Ableitung d(Δβ)/dλ erfolgt dann rechnerisch aus den verbleibenden Meßdaten. Unter Berücksichtigung der Länge L des Lichtwellenleiters 2 ergibt sich dann der Dispersionskoeffizienten D.

## Patentansprüche

1. Verfahren zum Messen der chromatischen Dispersion einer optischen Übertragungsstrecke, vorzugsweise eines Lichtwellenleiters (2),
wobei ein amplitudenmoduliertes, breitbandiges optisches Signal in die zu messende optische Übertragungsstrecke eingespeist wird,
wobei das übertragene Signal in einen Referenzpfad (5), in dem aus dem übertragenen Signal die Modulationsfrequenz demoduliert wird, und in einen Meßpfad (8), in dem das übertragene Signal bei mehreren optischen Frequenzen jeweils demoduliert wird, aufgespalten wird, und
wobei aus den Phasendifferenzen (Δβ) zwischen den mehreren demodulierten Signalen des Meßpfads (8) und dem demodulierten Signal des Referenzpfads (5) die chromatische Dispersion der optischen Übertragungsstrecke ermittelt wird.

2. Verfahren nach Anspruch 1, **dadurch gekennzeichnet, daß** das übertragene Signal größtenteils, vorzugsweise zu mindestens 80%, in den Meßpfad (8) eingekoppelt wird.

3. Verfahren nach Anspruch 1 oder 2, **dadurch gekennzeichnet, daß** für die Phasendifferenzmessung die demodulierten Signale zuvor in einen niedrigeren Frequenzbereich umgesetzt werden.

4. Vorrichtung (1) zum Messen der chromatischen Dispersion einer optischen Übertragungsstrecke, vorzugsweise eines Lichtwellenleiters (2), insbesondere zur Durchführung des Verfahrens nach einem der vorhergehenden Ansprüche,
mit einer amplitudenmodulierten, breitbandigen Lichtquelle (3) eingangsseitig der zu messenden optischen Übertragungsstrecke,
mit einer das übertragene optische Signal in einen Referenzpfad (5) und einen Meßpfad (8) aufspaltenden Einrichtung (4),
mit einem im Meßpfad (8) vorgesehenen abstimmbaren schmalbandigen optischen Filter (9),
mit jeweils einem Photodetektor (7, 10) im Referenzpfad (5) und im Meßpfad (8) und
mit einer ausgangsseitig der beiden Photodetektoren (7, 10) vorgesehenen Phasenmeßeinrichtung (16) zum Ermitteln der jeweils zwischen Referenz- und Meßpfad (5, 8) vorhandenen Phasendifferenzen (Δβ), aus denen die chromatische Dispersion der optischen Übertragungsstrecke bestimmt werden kann.

5. Vorrichtung nach Anspruch 4, **dadurch gekennzeichnet, daß** im Referenzpfad (5) vor dem Photodetektor (7) ein breitbandiges optisches Filter (6) vorgesehen ist.

6. Vorrichtung nach Anspruch 4 oder 5, **gekennzeichnet durch** eine mit dem Referenzpfad (5) und dem Meßpfad (8) verbundene Frequenzquelle (11), welche die demodulierten Signale beider Pfade (5, 8) **durch** Frequenzmischen in einen niedrigeren Frequenzbereich umsetzt.

7. Vorrichtung nach einem der Ansprüche 4 bis 6, **dadurch gekennzeichnet, daß** die Phasenmeßeinrichtung (16) zwei Phasenmesser (18a, 18b) aufweist, deren Kennlinien, vorzugsweise um 180°, gegeneinander versetzt sind.

## Claims

1. Method for measuring the chromatic dispersion of an optical transmission link, preferably of a light waveguide (2), wherein an amplitude modulated broadband optical signal is fed into the optical transmission link to be measured, wherein the transmitted signal is separated into a reference path (5), in which the modulation frequency is demodulated out of the transmitted signal, and into a measuring path (8), in which the transmitted signal is demodulated at several optical frequencies respectively, and wherein the chromatic dispersion of the optical transmission link is determined from the phase differences (Δβ) between the several demodulated signals of the measuring path (8) and the demodulated signal of the reference path (5).

2. Method according to claim 1, **characterized in that** the transmitted signal is coupled for the most part, preferably at least 80%, into the measuring path (8).

3. Method according to claim 1 or 2, **characterized in that** for measuring the phase difference the demodulated signals are first transferred to a lower frequency range.

4. Apparatus (1) for measuring the chromatic dispersion of an optical transmission link, preferably of a light waveguide (2), in particular for performing the method according to any of the preceding claims, with an amplitude modulated, broadband light source (3) at the input side of the optical transmission link to be measured, with a device (4) which separates the transmitted optical signal into a reference path (5) and a measuring path (8), with a tuneable narrowband optical filter (9) provided in the measuring path (8), with a photo detector (7, 10) in the reference path (5) and in the measuring path respectively, and with a phase measuring device (16) provided at the output side of the two photo detectors (7, 10) for determining the phase differences (Δβ) respectively present between the reference and measuring path (5, 8), from which the chromatic dispersion of the optical transmission link can be determined.

5. Apparatus according to claim 4, **characterized in that** a broadband optical filter (6) is provided upstream of the photo detector (7) in the reference path (5).

6. Apparatus according to claim 4 or 5, **characterized by** a frequency source (11) connected to the reference path (5) and the measuring path (8), which transfers the demodulated signals of both paths (5, 8) into a lower frequency range by frequency mixing.

7. Apparatus according to any of the claims 4 through 6, **characterized in that** the phase measuring device (16) comprises two phase meters (18a, 18b), the characteristic curves of which are offset to one another, preferably by 180°.

## Revendications

1. Procédé pour mesurer la dispersion chromatique d'une section de transmission optique, de préférence d'un guide d'ondes optiques (2),
selon lequel un signal optique modulé en amplitude et à large bande est injecté dans la section de transmission optique à mesurer,
selon lequel le signal transmis est réparti entre une voie de référence (5), dans laquelle la fréquence de modulation est démodulée du signal transmis, et une voie de mesure (8), dans laquelle le signal transmis est démodulé respectivement pour plusieurs fréquences optiques, et
selon lequel la dispersion chromatique de la section de transmission optique est déterminée à partir des différences de phase (Δβ) entre la pluralité de signaux démodulés de la voie de mesure (8) et le signal démodulé de la voie de référence (5).

2. Procédé selon la revendication 1, **caractérisé en ce que** le signal transmis est injecté en majeure partie, de préférence pour au moins 80 %, dans la voie de mesure (8).

3. Procédé selon la revendication 1 ou 2, **caractérisé en ce que** pour la mesure de la différence de phase, les signaux démodulés sont amenés au préalable par conversion dans une gamme de fréquences plus faibles.

4. Dispositif (1) pour mesurer la dispersion chromatique d'une section de transmission optique, de préférence d'un guide d'ondes optiques (2), notamment pour la mise en oeuvre du procédé selon l'une des revendications précédentes, comportant
une source de lumière (3) modulée en amplitude et à large bande, sur le côté entrée de la section de transmission optique à mesurer,
un dispositif (4) qui répartit le signal optique transmis entre une voie de référence (5) et une voie de mesure (8), un filtre optique accordable à large bande (9) prévu dans la voie de mesure (8),
respectivement un photodétecteur (7, 10) dans la voie de référence (5) et dans la voie de mesure (8), et
un dispositif de mesure de phase (16) prévu sur le côté sortie des deux photodétecteurs (7, 10) pour en déterminer les différences de phase (Δβ), qui sont présentes respectivement entre la voie de référence et la voie de mesure (5, 8) et à partir desquelles la dispersion chromatique de la section de transmission optique peut être déterminée.

5. Dispositif selon la revendication 4, **caractérisé en ce qu'**un filtre optique à large bande (6) est prévu dans la voie de référence (5) devant le photodétecteur (7).

6. Dispositif selon la revendication 4 ou 5, **caractérisé par** une source de fréquence (11), qui est reliée à la voie de référence (5) et à la voie de mesure (8) et qui convertit les signaux démodulés des deux voies (5, 8) par détermination de la fréquence dans une gamme de fréquences plus faibles.

7. Dispositif selon l'une des revendications 4 à 6, **caractérisé en ce que** le dispositif de mesure de phase (16) comporte deux phasemètres (18a, 18b) dont les courbes caractéristiques sont décalées réciproquement, de préférence de 180°.
